# EUROPEAN PATENT SPECIFICATION

(11) **EP 3 977 490 B1**
(45) Date of publication and mention of the grant of the patent: **05.07.2023**
(21) Application number: 20727546.2
(22) Date of filing: 05.05.2020
(51) Int. Cl.: H01B 7/295, H01B 11/02, H01B 3/00, H01B 13/14

(54) **MICROENCAPSULATED AMMONIUM OCTAMOLYBDATE AS A FLAME RETARDANT IN A CABLE JACKET**
MIKROVERKAPSELTES AMMONIUMOCTAMOLYBDAT ALS FLAMMHEMMER IN EINEM KABELMANTEL
OCTAMOLYBDATE D'AMMONIUM MICROENCAPSULÉ EN TANT QUE RETARDATEUR DE FLAMME DANS UNE GAINE DE CÂBLE

(30) Priority: 30.05.2019 US 201962854423 P
(43) Date of publication of application: 06.04.2022
(73) Proprietor: CommScope, Inc. of North Carolina, Hickory, NC 28602 (US)
(72) Inventor: GALLA, Matthew, Hickory, NC 28602 (US); CHEATLE, Wayne, Hickory, NC 28602 (US)
(74) Representative: FDST Patentanwälte
(86) International application number: PCT/US2020/031490
(87) International publication number: WO 2020/242730

(56) References cited:
- US-A- 5 514 837
- US-A- 5 770 820
- US-A1- 2014 141 244

## Description

### BACKGROUND OF THE INVENTION

### 1. Field of the Invention

The present invention relates to a flame retardant for a jacket of a cable. More particularly, the present invention provides microencapsulated ammonium octamolybdate (AOM) in a jacket of a communications cable, so that the cable may show an improved performance in damp conditions.

### 2. Description of the Related Art

Indoor plenum cables typically have a polymer jacket, such as a jacket including polyvinyl chloride (PVC) or fluorinated ethylene propylene (FEP) materials. Flame retardants are added to the jacket material so that smoke and flame are suppressed should a fire exist adjacent to the plenum cable. It is important to have a sufficient amount of flame retardant within the jacket material, as plenum cables often extend between floors of a multistory building and between rooms on a common floor, e.g., through HVAC ducts, electrical conduits, or simply inside walls and above drop tile ceilings. If a flame retardant is not added to the jacket material, the cable jacket may become a highly flammable substance during a fire and quickly allow a fire to spread between floors of a multistory building and/or between rooms on a common floor.

Plenum cables are designed as "indoor" cables, as such the cables do not typically have the robust qualities of "outdoor" rated cables. The jacket materials of an outdoor rated cable may include additives or surface treatments to resist exposure to the sun, e.g., ultraviolet (UV) light resistance, and an ability to resist direct contact with water, e.g., damp, high moisture situations. Outdoor cables also do not need to be as rigorous when it comes to smoke and flame retardants, since the smoke may dissipate to the outdoor environment. As such, a typical fire retardant additive for an outdoor jacket need not be as effective and/or costly as AOM, and is typically a much cheaper additive like red phosphorus, talc or clay. A plenum cable comprising a plurality of wires surrounded by a jacket, wherein the jacket comprises ammonium octomolybdate is disclosed in US2014141244 A1.

### SUMMARY OF THE INVENTION

The Applicant has appreciated certain drawbacks with the AOM fire retardant. AOM is considered the superior flame retardant for indoor plenum cables. However, under certain unusual circumstances AOM fails to perform well as a flame retardant.

As previously mentioned "indoor" plenum cables must have more smoke suppression abilities than "outdoor" cables. Also, indoor plenum cables are not designed for water exposure. Under some unusual circumstance, indoor plenum cable can be exposed to direct contact with water, or at least high humidity environments. Take for example a situation where a building's roof or fresh water piping or waste water piping has a leak. The leaking water sometimes comes into contact with a pathway of the indoor plenum cable.

If the leaking water enters the duct system, electrical conduit, wall or ceiling containing the plenum cable, an extended length of the plenum cable may be exposed to the water for an extended period of time. Sometimes, leaking water can even follow along the plenum cable for a distance before reaching a drip point. Also, in the case of an imbalance within an HVAC system, condensation can occur and travel along the ducts, and/or leak from the ducts into an electrical conduit, wall or ceiling. Also, high humidity rooms, such as swimming pool rooms, bathrooms, shower rooms, kitchens, etc., can produce excessive amounts of moisture, which may condensate into an area or along the outside walls of a water pipe and drip into ducts, conduits, walls or ceilings and contact the plenum cables.

The Applicant has discovered that the AOM fire retardant additive, when exposed to water and high humidity, will leach out of the cable jacket material. The AOM will follow along with the flow of water, e.g., within a conduit, along a duct, or along the cable jacket to the drip point. At the drip point, the AOM will deposit. Once, the moisture event dries up, the AOM will take the form of "salt-like" powdery material. For example, if the water flow passes along many feet of conduit into an electrical box, the AOM material may deposit a sizeable amount of powder at the bottom of the electrical box, e.g., up to one pound of the salt-like material.

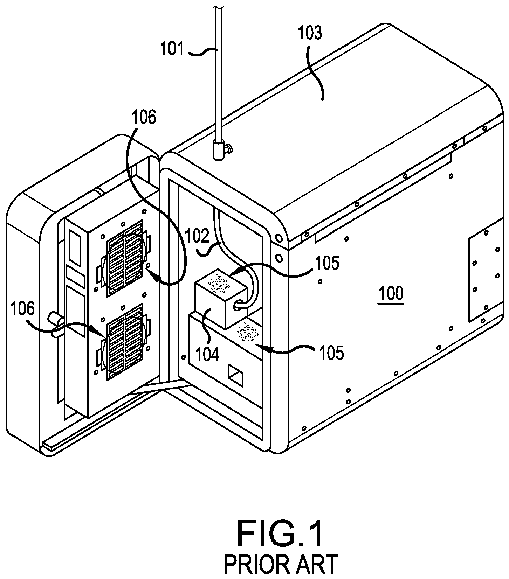

Figure 1 shows a prior art cabinet 100 having a conduit 101 attached to a roof 103 of the cabinet 100. Inside the cabinet, a plenum cable 102 (constructed in accordance with the prior art) exits the conduit 101 and enters into an electric box 104. If water has travelled along the plenum cable 102 inside the conduit 101, AOM will leach out of the jacket of the plenum cable 102 and deposit as a salt-like powdery substance 105 at drip spots within the cabinet 100. The water may dry up due to cooling fans 106 and air conditioning within the cabinet 100, or naturally dry up when the water leaking situation stops, e.g., it stops raining, the building's AC system is not running in the winter, the plumbing leak is fixed, etc. However, the powdery substance 105 will remain within the cabinet 100.

The Applicant has appreciated two significant drawbacks to the unusual situations wherein the plenum cable jacket is exposed to water, as outlined above. First, some of the AOM within the plenum cable jacket is leaching out of the cable jacket. Hence, the flame and smoke retardant ability of the cable's jacket material is being reduced over time as the cable is exposed to water. As such, a plenum cable, which has been exposed repeatedly or long term to water or moisture may no longer have the needed flame and smoke resistance.

Second, the powdery substance 105, which is primarily leached out AOM, potentially chemically modified by the heat of the extrusion process when the jacket was applied to the cable, and potentially chemically combined or changed by the other elements forming the jacket material as well as the liquid that caused the leaching process, could be problematic to humans and the building's equipment. Construction workers often need to access the ductwork, conduits, ceiling spaces and electrical boxes for repairs and upgrades, and it would be better for the workers to not be exposed to the powdery substance 105.

In the case of ductwork, the powdery substance 105 could even enter the HVAC system. Also in the case of the powdery substance 105 deposited within a cabinet 100, the cabinet 100 may also house sensitive electronic equipment, like hard drives, equipment cooling fans 106, and optical connections via lasers and detectors, all or which could be adversely affected by powdery substance 105 within or adjacent to the cabinet 100.

The Applicant has invented adding microencapsulated AOM to the cable jacket to lessen or eliminate the potential drawbacks noted above. The cable jacket will still have the superior protection of the AOM fire retardant. However, the microencapsulated AOM fire retardant will no longer leach out of the cable jacket when the cable jacket is exposed to water.

Further, microencapsulating the AOM within the outer cable jacket may allow the plenum rated cable to be ran into an outdoor environment, especially if a UV inhibitor additive is added to the jacket material. Although the plenum rated cable is usually more expensive than the outdoor cable there are instances, where running the plenum cable outdoors for a short distance can be more economical. For example, if the run length is only several dozen feet, it would probably be more cost efficient to continue the indoor plenum cable to an outdoor unit, as opposed to terminating the indoor plenum cable to a junction box on the side of the building and then running several dozen feet of outdoor rated cable from the junction box to the outdoor unit. In other words, the cost and time associated with the junction box on the side of the building may exceed the added cost of the more expensive plenum cable.

These and other objects are accomplished by a communications cable including a communications carrying medium with a jacket surrounding the communications carrying medium, where the jacket is formed of a polymer having a microencapsulated ammonium octamolybdate (AOM) additive therein.

Moreover, these and other objects are accomplished by a communications cable including a communications carrying medium including a first insulated conductor and a second insulated conductor, wherein the first insulated conductor is twisted with the second insulated conductor to form a first twisted pair. An inner jacket surrounds the first twisted pair, and an outer jacket surrounds the inner jacket. The outer jacket is formed of a polymer having a microencapsulated AOM additive therein.

Further, these and other objects are accomplished by a method of making a communications cable. The method includes feeding a communications carrying medium from a reel. Then, extruding an outer jacket around the communications carrying medium, where the outer jacket is formed of a polymer having a microencapsulated AOM additive therein.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus, are not limits of the present invention, and wherein:
Figure 1 is a perspective view of a cabinet with a conduit-protected plenum cable entering the cabinet, in accordance with the prior art;
Figure 2 is an end perspective view of a twisted pair cable with a jacket, in accordance with a first embodiment of the present invention;
Figure 3 is a cross sectional view taken along line III--III in Figure 2;
Figure 4 is a close-up view of a section of a material forming the jacket in Figures 2 and 3;
Figure 5 is an end perspective view of a fiber optic cable with a jacket, in accordance with a second embodiment of the present invention;
Figure 6 is an end perspective view of a coaxial cable with a jacket, in accordance with a third embodiment of the present invention;
Figure 7 is an end perspective view of a dual-jacket twisted pair cable, in accordance with a fourth embodiment of the present invention;
Figure 8 is a cross sectional view taken along line VIII--VIII in Figure 7;
Figure 9 is a flow chart illustrating a method to form a cable, in accordance with a first embodiment of the present invention; and
Figure 10 is a flow chart illustrating a method to form a cable, in accordance with a second embodiment of the present invention.

### DETAILED DESCRIPTION OF EMBODIMENTS OF THE INVENTION

The present invention now is described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

Like numbers refer to like elements throughout. In the figures, the thickness of certain lines, layers, components, elements or features may be exaggerated for clarity. Broken lines illustrate optional features or operations unless specified otherwise.

The terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein. Well-known functions or constructions may not be described in detail for brevity and/or clarity.

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. As used herein, phrases such as "between X and Y" and "between about X and Y" should be interpreted to include X and Y. As used herein, phrases such as "between about X and Y" mean "between about X and about Y." As used herein, phrases such as "from about X to Y" mean "from about X to about Y."

It will be understood that when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being, for example, "directly on", "directly attached" to, "directly connected" to, "directly coupled" with or "directly contacting" another element, there are no intervening elements present. It will also be appreciated by those of skill in the art that references to a structure or feature that is disposed "adjacent" another feature may have portions that overlap or underlie the adjacent feature.

Spatially relative terms, such as "under", "below", "lower", "over", "upper", "lateral", "left", "right" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is inverted, elements described as "under" or "beneath" other elements or features would then be oriented "over" the other elements or features. The device may be otherwise oriented (rotated 90 degrees or at other orientations) and the descriptors of relative spatial relationships used herein interpreted accordingly.

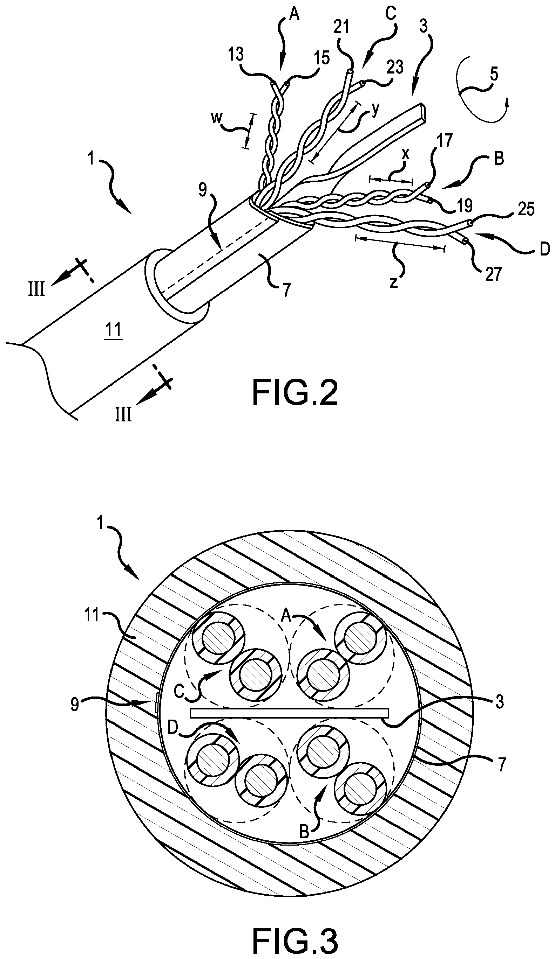

Figure 2 is a perspective view of a twisted pair cable 1, in accordance with a first embodiment of the present invention. Figure 3 is a cross sectional view of the cable 1 taken along line III--III in Figure 2. The cable 1 includes a jacket 11 formed around and surrounding a communications carrying medium in the form of first, second, third and fourth twisted pairs A, B, C and D. The jacket 11 is formed of a polymer. For example, the jacket 11 may be formed of polyvinylchloride (PVC), low smoke PVC, polyethylene (PE), polyolefin (PO), fluorinated ethylene propylene (FEP), polyvinylidene fluoride (PVDF), ethylene chlorotrifluoroethylene (ECTFE), or other foamed or solid polymer materials common to the cabling art. A primary feature of the present invention is that the jacket 11 is formed of a polymer having a microencapsulated ammonium octamolybdate (AOM) additive therein, as will be described in greater detail below.

A separator 3 within the jacket 11 resides between and separates the first and fourth twisted pairs A and C from the second and third twisted pairs B and D. In Figures 2 and 3, the separator 3 is formed by a thin strip of dielectric material, having a thickness of about twenty mils or less, more preferably eighteen mils or less, such as about fifteen mils. However, the separator 3 is optional. Also, other sizes and shapes of separators 3 may be employed in combination with the present invention, such as plus-shaped or star-shaped separators, sometimes referred to as a flute, isolator, or cross-web. The separator 3 may be formed of any solid or foamed material common to the cabling art, such as a polyolefin or fluoropolymer, like fluorinated ethylene propylene (FEP) or polyvinylchloride (PVC).

The first twisted pair A includes a first insulated conductor 13 and a second insulated conductor 15. The first insulated conductor 13 is twisted with the second insulated conductor 15, in a helical fashion, to form the first twisted pair A. The second twisted pair B includes a third insulated conductor 17 and a fourth insulated conductor 19. The third insulated conductor 17 is twisted with the fourth insulated conductor 19, in a helical fashion, to form the second twisted pair B. The third twisted pair C includes a fifth insulated conductor 21 and a sixth insulated conductor 23. The fifth insulated conductor 21 is twisted with the sixth insulated conductor 23, in a helical fashion, to form the third twisted pair C. The fourth twisted pair D includes a seventh insulated conductor 25 and an eighth insulated conductor 27. The seventh insulated conductor 25 is twisted with the eighth insulated conductor 27, in a helical fashion, to form the fourth twisted pair D.

The first through fourth twisted pairs A, B, C and D may be surrounded by a shielding layer 7 which overlaps itself at reference numeral 9. Although a shielded twisted pair cable is shown, the benefits of the present invention also extend to unshielded twisted pair cables, and dual jacketed twisted pair cables, as will be discussed hereinafter. The primary feature is to produce a plenum rated cable, capable of meeting the standards set by the National Fire Protection Association 262: Standard Method of Test for Flame Travel and Smoke of Wires and Cables for Use in Air-Handling Spaces, and/or the flame test specified by Underwriters Laboratories Inc. UL-910, and/or the Canadian Standards Associate (CSA) FT6.

The first twist length w of the first twisted pair A is preferably set to a short length, such as between approximately 0.56 cm (0.22 inches) and approximately 0.97 cm (0.38 inches). The second twist length x of the second twisted pair B is different from the first twist length w and is between approximately 0.56 cm (0.22 inches) and approximately 0.97 cm (0.38 inches). For example, the first twist length w may be set to approximately 0.66 cm (0.26 inches) and the second twist length x may be set to approximately 0.84 (0.33 inches).

The first twist length w may purposefully modulate from a first average value, such as 0.66 cm (0.26 inches). For example, the first twist length w could purposefully vary between 0.61 and 0.71 cm (0.24 and 0.28 inches) along the length of the cable. Likewise, the second twist length x could purposefully modulate from a second average value, such as 0.84 cm (0.33 inches). For example, the second twist length x could purposefully vary between 0.79 and 0.89 cm (0.31 and 0.35 inches) along the length of the cable.

The third twisted pair C would have a third twist length y and the fourth twisted pair D would have a fourth twist length of z. In one embodiment, the third twist length y is different from the first, second and fourth twist lengths w, x and z, while the fourth twist length z is different from the first, second and third twist lengths w, x and y. Of course, the third and fourth twisted pairs C and D could employ a similar twist length modulation, as described in conjunction with the first and second twisted pairs A and B.

The first through fourth twisted pairs A, B, C and D may be stranded together in the direction 5 (see the arrow in Figure 2) to form a stranded core. In one embodiment, the core strand direction 5 is opposite to the pair twist directions of the first through fourth twisted pairs A, B, C and D. However, this is not a necessary feature.

The strand length of the core strand is about 12.70 cm (five inches) or less, more preferably about 7.62 cm (three inches) or less. In a more preferred embodiment, the core strand length is purposefully varied, or modulates, from an average strand length along a length of the cable 1. Core strand modulation can assist in the reduction of alien crosstalk. For example, the core strand length could modulate between 5.08 cm and 10.16 cm (two inches and four inches) along the length of the cable 1, with an average value of 7.62 cm (three inches). More details concerning modulation of the twisted pairs A, B, C and D and the core strand can be found in the Assignee's prior U.S. Patent 6,875,928, titled "Localized Area Network Cabling Arrangement with Randomized Variation".

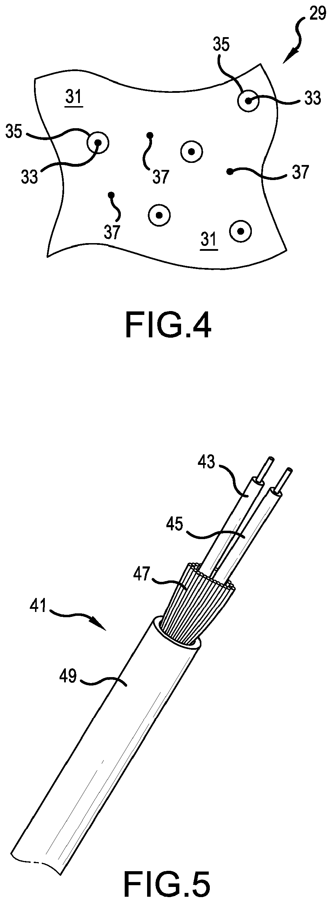

Figure 4 is a close-up view of a section of a material 29 forming the jacket 11. The majority of the material 29 is the polymer 31, such as PVC, low smoke zero halogen PVC, PE, PO, FEP, PVDF or ECTFE. The polymer 31 may be solid or foamed. Foaming the polymer 31 can reduce the dielectric constant of the polymer 31 and improve the electrical performance of the cable 1.

Within the polymer 31 is microencapsulated AOM, graphically represented by a particle or particles of AOM 33 surrounded by an encapsulation shell 35, which may take the form of a coating. The encapsulation shell 35 is impervious to water. Thus, the encapsulation shell 35 will not allow the AOM on the outer surface of the jacket 11 to contact water, go into a solution form, and leach out from the polymer 31 at the outer surface of the jacket 11.

The encapsulation shell 35 is designed to remain stable at temperatures less than 232.2 °C (450 degrees Fahrenheit), such as about 204.4 °C (400 degrees Fahrenheit) or less. In other words, the extrusion of the jacket 11 onto the cable core during the manufacturing process with not damage the encapsulation shell 35, such that the encapsulation shell 35 remains intact and surrounding the particle or particles of AOM 33. However, the encapsulation shell 35 will deteriorate and release the encapsulated particle or particles of AOM 33 at temperatures above 260 °C (500 degrees Fahrenheit), such as above 315.6 °C (600 degrees Fahrenheit). Such temperatures are indicative of a fire situation. Therefore, the AOM 33 will come into play in suppressing flame and/or smoke in the event of a fire.

Other additives 37 may also be present within the polymer 31. The other additives 37 may be microencapsulated or not microencapsulated. The other additives 37 may include additional fire retardants, like calcium carbonate, silica, talc, mica, and zinc borate (sold under the trademark FIRE BRAKE). The other additives 37 may also include an ultraviolet (UV) light resistance additive, additives to enhance the flexibility of the jacket 11, and/or additives that introduce a bitter taste or smell to the cable jacket 11 to deter rodents.

Figure 5 is an end perspective view of a fiber optic cable 41 with a jacket 49, in accordance with a second embodiment of the present invention. The fiber optic cable 41 has a communications carrying medium which includes at least one optical fiber, such as the depicted first and second optical fibers 43 and 45. The fiber optic cable 41 also includes a plurality of strength members 47, such as the depicted KEVLAR^{®} fibers, and could also or alternatively include one or more rigid rods, like glass reinforced plastic (GRP) rods. The jacket 49 is constructed of the material depicted in Figure 4 and described above.

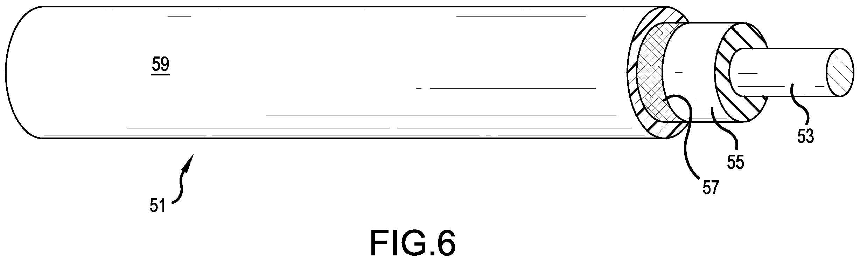

Figure 6 is an end perspective view of a coaxial cable 51 with a jacket 59, in accordance with a third embodiment of the present invention. The coaxial cable 51 has a communications carrying medium which includes a central conductor 53 surrounded by a dielectric material 55 surrounded by a shielding layer 57. The shielding layer 7 is in turn surrounded by the jacket 59, such that the communications carry medium in combination with the jacket 59 creates the coaxial cable 51. The jacket 59 is constructed of the material depicted in Figure 4 and described above.

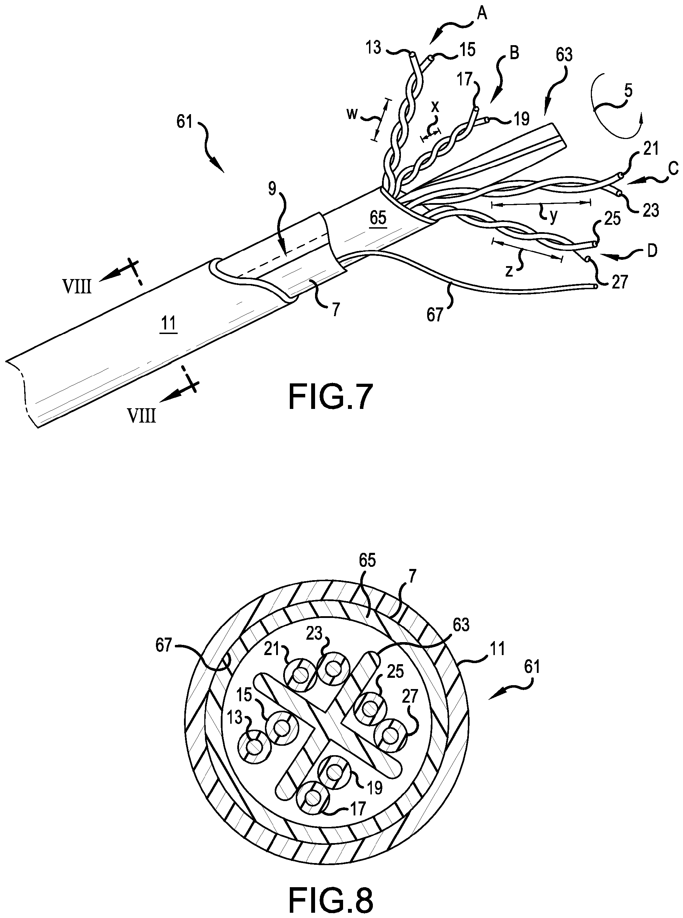

Figure 7 is an end perspective view of a dual jacket twisted pair cable 61, in accordance with a fourth embodiment of the present invention. Figure 8 is a cross sectional view taken along line VIII--VIII in Figure 7. The dual-jacket twisted pair cable 61 includes the first, second, third and fourth twisted pairs A, B, C and D, as shown in Figures 2 and 3. However, in the embodiment of Figures 7 and 8, the flat tape separator 3 has been replaced by a plus-shaped separator 63.

The plus-shaped separator 63 separates the first twisted pair A from the second, third and fourth twisted pairs B, C and D, separates the second twisted pair B from the third and fourth twisted pairs C and D, and also separates the third twisted pair C from the fourth twisted pair D. The plus-shaped separator 63 may be formed of any solid or foamed material common to the cabling art, such as a polyolefin or fluoropolymer, like fluorinated ethylene propylene (FEP) or polyvinylchloride (PVC). Also, the core may have a core twist in the direction indicated by arrow 5.

Unlike the embodiment of Figures 2-3, an inner jacket 65 resides between the shielding layer 7 and the first, second, third and fourth twisted pairs A, B, C and D. In other words, the shielding layer 7 surrounds the inner jacket 65. By spacing the shielding layer 7 further away from the first, second, third and fourth twisted pairs A, B, C and D, the electrical performance of the dual jacket twisted pair cable 61 can be improved. The presence of the inner jacket 65 allows the twisted pairs A, B, C and D perform more like an unshielded cable, while keeping the alien crosstalk performance of a shielded cable.

The shielding layer 7 may take the form of a laminated foil, e.g., aluminum on MYLAR^{®}. The shielding layer 7 may take the form of a braided shielding material. Also, the shielding layer 7 may include both types of shielding materials. A grounding or drain wire 67 may optionally be placed adjacent to the shielding layer 7, e.g., inside the shielding layer 7.

The shielding layer 7 is surrounded by an outer jacket 11. The outer jacket 11 may be constructed the same as the outer jacket 11 of Figures 2-3. In other words, the outer jacket 11 is constructed of the material depicted in Figure 4 and described above.

The inner jacket 65 may also be formed of the material depicted in Figure 4 and described above. However, in a preferred embodiment, the inner jacket 65 is formed of a different material as compared to the material used to form the outer jacket 11. Since the inner jacket 65 is not exposed to water contact on its outer surface, it does not need the more expensive microencapsulated AOM. Using a cellular (foamed) material may further improve the electrical performance of the cable 61. The inner jacket 65 may be formed of a material like foamed PVC or PO with or without fire retardants, while the outer jacket 11 may be formed of a polymer with a high dielectric constant, like FEP or PVDF, with the microencapsulated AOM.

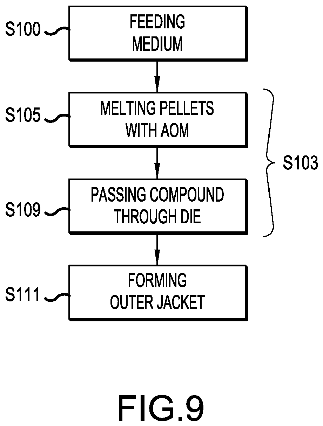

Figure 9 is a flow chart illustrating a method to form a communications cable 1, 41 or 51, in accordance with the present invention. The method includes feeding S100 a communications carrying medium, such as one or more twisted pairs A, B, C and/or D, or one or more optical fibers 43 and/or 45, or a center conductor 53 from a reel. Then, extruding S103 an outer jacket 11, 49 or 59 around the communications carrying medium, wherein the outer jacket 11, 49 or 59 is formed of a polymer having a microencapsulated ammonium octamolybdate (AOM) additive 33 therein.

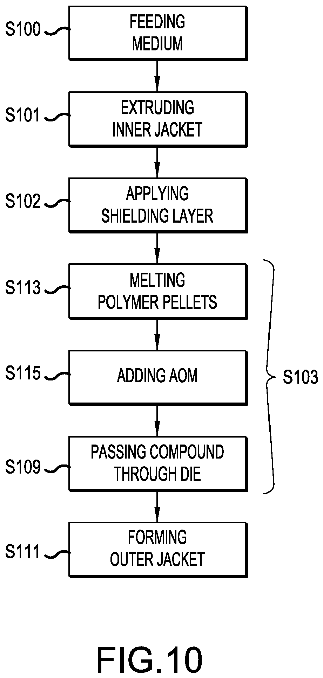

The extruding operation S103 may include melting S105 pellets formed of the polymer with the microencapsulated AOM additive 33 already within the pellets to form a compound. Alternative and as shown in Figure 10, the pellets formed of the polymer may be melted S113 into a compound and the microencapsulated AOM additive 33 may be added S115 into the compound by the extrusion machine. In either instance, the compound with the microencapsulated AOM additive 33 therein is then passed S109 through an extrusion die, thus forming S111 the outer jacket 11, 49 or 59 surrounding the communications carrying medium.

In the case of the dual-jacket twisted pair cable 61 of Figures 7-8, the method as shown in Figure 10 may also include extruding S101 an inner jacket 65 around the communications carrying medium and applying S102 a shielding layer 7 around the inner jacket 65 prior to the extruding operation S103. Thus, the outer jacket 11 surrounds the shielding layer 7 and the inner jacket 65.

The invention being thus described, it will be obvious that the same may be varied in many ways. Such variations are not to be regarded as a departure from the scope of the invention, and all such modifications as would be obvious to one skilled in the art are to be included within the scope of the following claims.

## Claims

1. A communications cable comprising:
a communications carrying medium; and
a jacket surrounding said communications carrying medium, wherein said jacket is formed of a polymer having a microencapsulated ammonium octamolybdate (AOM) additive therein.

2. The communications cable according to claim 1, wherein said communications carrying medium includes a first insulated conductor and a second insulated conductor, wherein said first insulated conductor is twisted with said second insulated conductor to form a first twisted pair, such that said communications carry medium in combination with said jacket causes said communications cable to be a twisted pair cable.

3. The communications cable according to claim 2, further comprising:
a shielding layer surrounding said first twisted pair, and located within said jacket, to form a shielded twisted pair cable.

4. The communications cable according to claim 3, wherein said jacket is considered an outer jacket, and further comprising:
an inner jacket surrounding said first twisted pair, wherein said outer jacket surrounds said shielding layer and said inner jacket.

5. The communications cable according to claim 4, wherein said inner jacket is formed of a material including polyvinyl chloride (PVC).

6. The communications cable according to claim 5, wherein said polymer of said outer jacket includes fluorinated ethylene propylene (FEP).

7. The communications cable according to claim 1, wherein said communications carrying medium includes a central conductor surrounded by a dielectric material surrounded by a shielding layer, such that said communications carry medium in combination with said jacket causes said communications cable to be a coaxial cable.

8. The communications cable according to claim 1, wherein said communications carrying medium includes at least one optical fiber and one or more strength members, such that said communications carry medium in combination with said jacket causes said communications cable to be a fiber optic cable.

9. The communication cable according to any one of claims 1, 2, 3, 4, 7 or 8, wherein said polymer includes other additives therein beside said microencapsulated AOM additive, and wherein said other additives include at least one of an additional flame retardant additive and an ultraviolet (UV) light resistance additive.

10. The communications cable according to any one of claims 1, 2, 3, 4, 7, 8 or 9, wherein said polymer is foamed to reduce the dielectric constant of said polymer.

11. The communications cable according to any one of claims 1, 2, 3, 4, 7, 8, 9 or 10, wherein said polymer includes either polyvinyl chloride (PVC), low smoke polyvinyl chloride (PVC), or fluorinated ethylene propylene (FEP).

12. The communications cable according to any one of claims 1, 2, 3, 4, 7, 8, 9, 10 or 11, wherein said communications cable is a plenum rated cable and/or achieves the requirements of National Fire Protection Association 262: Standard Method of Test for Flame Travel and Smoke of Wires and Cables for Use in Air-Handling Spaces or the flame test specified by Underwriters Laboratories Inc. UL-910.

13. A method of making a communications cable comprising:
feeding a communications carrying medium from a reel; and
extruding an outer jacket around the communications carrying medium, wherein the outer jacket is formed of a polymer having a microencapsulated ammonium octamolybdate (AOM) additive therein.

14. The method according to claim 13, wherein said extruding operation includes melting pellets formed of the polymer with the AOM additive already within the pellets to form a compound, and passing the compound through an extrusion die to form the outer jacket surrounding the communications carrying medium.

15. The method according to claim 13, further comprising:
extruding an inner jacket around the communications carrying medium prior to extruding the outer jacket, such that the outer jacket surrounds the inner jacket.

## Patentansprüche

1. Ein Kommunikationskabel, aufweisend:
einem Kommunikationsträgermedium; und
einem das Kommunikationsträgermedium umgebenden Mantel, wobei der Mantel aus einem Polymer mit einem mikroverkapselten Ammoniumoctamolybdat (AOM)-Additiv darin gebildet ist.

2. Kommunikationskabel nach Anspruch 1, wobei das Kommunikationsträgermedium einen ersten isolierten Leiter und einen zweiten isolierten Leiter aufweist, wobei der erste isolierte Leiter mit dem zweiten isolierten Leiter derart verdrillt ist, dass ein erstes verdrilltes Paar gebildet ist, so dass das Kommunikationsträgermedium in Kombination mit dem Mantel bewirkt, dass das Kommunikationskabel ein Twisted-Pair-Kabel ist.

3. Kommunikationskabel nach Anspruch 2, das ferner umfasst:
eine Abschirmungsschicht, die das erste verdrillte Paar umgibt und sich innerhalb des Mantels befindet, wodurch ein abgeschirmtes Twisted-Pair-Kabel gebildet ist.

4. Kommunikationskabel nach Anspruch 3, wobei der Mantel als Außenmantel betrachtet wird, und ferner umfassend:
einen das erste verdrillte Paar umgebenden inneren Mantel, wobei der äußere Mantel die Abschirmungsschicht und den inneren Mantel umgibt.

5. Kommunikationskabel nach Anspruch 4, wobei der innere Mantel aus einem Material hergestellt ist, das Polyvinylchlorid (PVC) enthält.

6. Kommunikationskabel nach Anspruch 5, wobei das Polymer des Außenmantels fluoriertes Ethylenpropylen (FEP) enthält.

7. Kommunikationskabel nach Anspruch 1, wobei das Kommunikationsträgermedium einen zentralen Leiter aufweist, der von einem dielektrischen Material umgeben ist, welches von einer Abschirmungsschicht umgeben ist, so dass das Kommunikationsträgermedium in Kombination mit dem Mantel bewirkt, dass das Kommunikationskabel ein Koaxialkabel ist.

8. Kommunikationskabel nach Anspruch 1, wobei das Kommunikationsträgermedium mindestens eine optische Faser und ein oder mehrere Verstärkungselemente aufweist, so dass das Kommunikationsträgermedium in Kombination mit dem Mantel bewirkt, dass das Kommunikationskabel ein Glasfaserkabel ist.

9. Kommunikationskabel nach einem der Ansprüche 1, 2, 3, 4, 7 oder 8, wobei das Polymer zusätzlich zu dem mikroverkapselten AOM-Additiv weitere Additive enthält, und wobei die weiteren Additive mindestens ein zusätzliches flammhemmendes Additiv und ein UV-Lichtbeständigkeitsadditiv enthalten.

10. Kommunikationskabel nach einem der Ansprüche 1, 2, 3, 4, 7, 8 oder 9, wobei das Polymer zur Verringerung von dessen Dielektrizitätskonstante geschäumt ist.

11. Kommunikationskabel nach einem der Ansprüche 1, 2, 3, 4, 7, 8, 9 oder 10, wobei das Polymer entweder Polyvinylchlorid (PVC), raucharmes Polyvinylchlorid (PVC) oder fluoriertes Ethylenpropylen (FEP) enthält.

12. Kommunikationskabel nach einem der Ansprüche 1, 2, 3, 4, 7, 8, 9, 10 oder 11, wobei das Kommunikationskabel ein Plenum-zertifiziertes Kabel ist und/oder die Anforderungen der "National Fire Protection Association 262: Standard Method of Test for Flame Travel and Smoke of Wires and Cables for Use in Air-Handling Spaces" oder den von Underwriters Laboratories Inc. vorgesehenen UL-910-Flammtest erfüllt

13. Verfahren zur Herstellung eines Kommunikationskabels, umfassend:
Zuführen eines Kommunikationsträgers von einer Spule; und
Extrudieren eines Außenmantels um das Kommunikationsträgermedium herum, wobei der Außenmantel aus einem Polymer mit einem mikroverkapselten Ammoniumoctamolybdat (AOM)-Additiv darin gebildet ist.

14. Verfahren nach Anspruch 13, wobei das Extrudieren ein Schmelzen von aus dem Polymer gebildeten Pellets mit dem AOM-Additiv, das sich bereits in den Pellets befindet, unter Ausbildung einer Verbundmasse beinhaltet sowie ein Durchleiten der Verbundmasse durch eine Extrusionsdüse zur Ausbildung des äußeren Mantels, welcher das Kommunikationsträgermedium umgibt.

15. Verfahren nach Anspruch 13, das ferner umfasst:
Extrudieren eines Innenmantels um das Kommunikationsträgermedium vor dem Extrudieren des Außenmantels, so dass der Außenmantel den Innenmantel umgibt.

## Revendications

1. Un câble de communication, comprenant
un support de communication ; et
une gaine entourant ledit support de communication, ladite gaine étant formée d'un polymère contenant un additif d'octamolybdate d'ammonium (AOM) microencapsulé.

2. Câble de communication selon la revendication 1, dans lequel le support de communication comprend un premier conducteur isolé et un deuxième conducteur isolé, le premier conducteur isolé étant torsadé avec le deuxième conducteur isolé pour former une première paire torsadée, de sorte que le support de communication, en combinaison avec la gaine, fait que le câble de communication est un câble à paire torsadée.

3. Câble de communication selon la revendication 2, comprenant en outre :
une couche de blindage entourant la première paire torsadée, et située à l'intérieur de la gaine, pour former un câble à paires torsadées blindé.

4. Câble de communication selon la revendication 3, dans lequel la gaine est considérée comme une gaine extérieure, et comprenant en outre :
une gaine intérieure entourant la première paire torsadée, la gaine extérieure entourant la couche de blindage et la gaine intérieure.

5. Câble de communication selon la revendication 4, dans lequel la gaine interne est fabriquée à partir d'un matériau contenant du chlorure de polyvinyle (PVC).

6. Câble de communication selon la revendication 5, dans lequel le polymère de la gaine extérieure contient de l'éthylène propylène fluoré (FEP).

7. Câble de communication selon la revendication 1, dans lequel le support de communication comprend un conducteur central entouré d'un matériau diélectrique entouré d'une couche de blindage, de sorte que ledit support de communication, en combinaison avec ladite gaine, fait que ledit câble de communication est un câble coaxial.

8. Câble de communication selon la revendication 1, dans lequel le support de communication comprend au moins une fibre optique et un ou plusieurs éléments de renforcement, de sorte que le support de communication, en combinaison avec la gaine, fait que le câble de communication est un câble à fibre optique.

9. Câble de communication selon l'une des revendications 1, 2, 3, 4, 7 ou 8, dans lequel le polymère contient d'autres additifs en plus de l'additif AOM microencapsulé, et dans lequel les autres additifs contiennent au moins un additif ignifuge supplémentaire et un additif de résistance à la lumière UV.

10. Câble de communication selon l'une des revendications 1, 2, 3, 4, 7, 8 ou 9, dans lequel le polymère est expansé pour réduire sa constante diélectrique.

11. Câble de communication selon l'une des revendications 1, 2, 3, 4, 7, 8, 9 ou 10, dans lequel le polymère comprend soit du polychlorure de vinyle (PVC), soit du polychlorure de vinyle à faible émission de fumée (PVC), soit de l'éthylène propylène fluoré (FEP).

12. Câble de communication selon l'une des revendications 1, 2, 3, 4, 7, 8, 9, 10 ou 11, dans lequel le câble de communication est un câble certifié plenum et/ou répond aux exigences de la "National Fire Protection Association 262 : Standard Method of Test for Flame Travel and Smoke of Wires and Cables for Use in Air-Handling Spaces" ou au test à la flamme UL-910 spécifié par Underwriters Laboratories Inc.

13. Procédé de fabrication d'un câble de communication, comprenant :
l'alimentation d'un support de communication à partir d'une bobine ; et
l'extrusion d'une gaine extérieure autour du support de communication, la gaine extérieure étant formée d'un polymère ayant un additif d'octamolybdate d'ammonium (AOM) microencapsulé à l'intérieur.

14. Procédé selon la revendication 13, dans lequel l'opération d'extrusion consiste à fondre des granulés de polymère contenant déjà l'additif AOM pour former un composé, et à faire passer le composé à travers une filière d'extrusion pour former la gaine extérieure entourant le support de communication.

15. Procédé selon la revendication 13, comprenant en outre :
l'extrusion d'une gaine intérieure autour du support de communication avant l'extrusion de la gaine extérieure, de sorte que la gaine extérieure entoure la gaine intérieure.
